# EUROPÄISCHE PATENTANMELDUNG

(11) **EP 4 119 899 A1**
(43) Date of publication of application: **18.01.2023**
(21) Application number: 21884891.9
(22) Date of filing: 08.10.2021
(51) Int. Cl.: G01C 21/36

(54) **PATH DISPLAY METHOD AND RELATED APPARATUS**

(30) Priority: 30.10.2020 CN 202011189857
(71) Applicant: Tencent Technology (Shenzhen) Company Limited, Shenzhen, Guangdong 518057 (CN)
(72) Inventor: ZHANG, Long, Shenzhen, Guangdong 518057 (CN); YANG, Ming, Shenzhen, Guangdong 518057 (CN); HE, Ming, Shenzhen, Guangdong 518057 (CN); ZHAO, Xueshu, Shenzhen, Guangdong 518057 (CN); PAN, Zhongzhen, Shenzhen, Guangdong 518057 (CN); MENG, Fanrong, Shenzhen, Guangdong 518057 (CN)
(74) Representative: Eisenführ Speiser
(86) International application number: PCT/CN2021/122536
(87) International publication number: WO 2022/089162

(57) **Abstract**

A path display method and a related apparatus, which can be applied to an electronic map navigation scenario. When a path planning request for a path planning mode is acquired, a corresponding path planning result and original explanation data possibly involved in the present path planning result are determined; a path explanation scenario corresponding to the original explanation data, and a path planning mode are taken as query words, and a corresponding target explanation template is queried; and target explanation elements needing to be displayed when the path planning result is displayed in an electronic map are determined by means of the target explanation template, so as to perform explanation description on the path planning result by using the target explanation elements. Explanation templates are stored, queried, modified and synchronized by means of a database, such that combinations of various path planning modes and path explanation scenarios are decoupled from each other, the explanation templates can be independently maintained and updated, a terminal device (100) can complete the display of explanation elements only according to an indication of element information, and processing resources of the terminal device are released.

## Description

### RELATED APPLICATION

The present disclosure claims priority to Chinese Patent Application No. 2020111898574, entitled "METHOD AND RELATED APPARATUS FOR DISPLAYING ROUTE" and filed with the China National Intellectual Property Administration on October 30, 2020, which is incorporated herein by reference in its entirety.

### FIELD OF THE TECHNOLOGY

The present disclosure relates to the field of electronic maps, and in particular, to a technique of displaying a route in the electronic maps.

### BACKGROUND OF THE APPLICATION

Route planning is a basis of electronic map navigation, and is one of the most important core functions in electronic maps. Generally, the route planning refers to finding one or more routes from a designated source to a designated destination. Besides activating route planning on a homepage of the electronic map, a request for planning a new route can be triggered under various route planning modes, for example, when route deviation in navigation, when switching between main and auxiliary roads, when a change of user's preference, or when adding or removing a stop (a via point). A route planning result, which is computed in response to the route planning request, may be displayed through the electronic map after being obtained.

When the route planning result is displayed, corresponding explanations needs to be provided to resolve user's potential confusions concerning the current route planning result. The confusions are, for example, why not recommend a familiar route, or why the recommended route recommended a bit detoured. That is, when the route planning result is displayed, a reason of recommendation is correspondingly displayed, so as to resolve the user confusions.

Development of electronic maps engenders an increasing number of the foregoing scenarios for explaining the routes. The scenarios are, for example, traffic control and road closure. Anew scenario of route explanation needs to be compatible with different route planning modes. As a result, there would be a large number of new combinations formed by the route explaining scenarios and the route planning modes.

In conventional technology, hard-coding is utilized to implement the route explaining scenarios in the electronic map. That is, each time a new route explaining scenario is added, a server and a terminal device need to update protocol data based on the new route explaining scenario and numerous combinations related to the new route explaining scenario. The coding has a complex logic, and a new version cannot be released until each terminal and each server implement iteration of respective internal logic, which results in a rather low overall iteration efficiency.

### SUMMARY

In order to address the above technical issue, a method and an apparatus for displaying a route are provided according to embodiments of the present disclosure, which simplifies code logic and improve iteration efficiency.

Following technical solutions are provided according to embodiments of the present disclosure.

In a first aspect, a method for displaying a route is provided according to an embodiment of the present disclosure. The method is executable on a server, and includes: determining a corresponding result of route planning and original explanation data according to a request of route planning which is for a mode of route planning, where the mode of route planning is configured to identify a cause for initiating the request of route planning; determining a corresponding target explanation template according to the mode of route planning and a route explaining scenario corresponding to the original explanation data; determining element information according to the original explanation data and the target explanation template, where the element information includes an element identifier of a target explanation element corresponding to the result of route planning; and transmitting the element information to a terminal device, where the element identifier in the element information is configured to indicate display of the target explanation element when the terminal device displays the result of route planning.

In a second aspect, another method for displaying a route is provided according to an embodiment of the present disclosure. The method is executable on a terminal device, and includes: transmitting a request of route planning, which is for a mode of route planning, to a server, where the mode of route planning is configured to identify a cause for initiating the request of route planning; obtaining element information returned by the server, where the element information includes an element identifier, and the element identifier is configured to indicate display of a target explanation element when the terminal device displays a result of route planning; determining the target explanation element from a pool of explanation resources, which are locally stored, according to the element identifier included in the element information; and displaying the target explanation element when the result of route planning, which corresponds to the request of route planning, is displayed.

In a third aspect, an apparatus for displaying a route is provided according to an embodiment of the present disclosure. The apparatus includes: a first determining unit, configured to determine a corresponding result of route planning and original explanation data according to a request of route planning which is for a mode of route planning, where the mode of route planning is configured to identify a cause for initiating the request of route planning; a second determining unit, configured to determine a corresponding target explanation template according to the mode of route planning and a route explaining scenario corresponding to the original explanation data; a third determining unit, configured to determine element information according to the original explanation data and the target explanation template, where the element information includes an element identifier of a target explanation element corresponding to the result of route planning; and a fourth determining unit, configured to transmit the element information to a terminal device, where the element identifier in the element information is configured to indicate display of the target explanation element when the terminal device displays the result of route planning.

In a fourth aspect, another apparatus for displaying a route is provided according to an embodiment of the present disclosure. The apparatus includes: a transmitting unit, configured to transmit a request of route planning, which is for a mode of route planning, to a server, where the mode of route planning is configured to identify a cause for initiating the request of route planning; an obtaining element, configured to obtain element information returned by the server, where the element information includes an element identifier, and the element identifier is configured to indicate display of a target explanation element when the terminal device displays a result of route planning; a determining unit, configured to determine the target explanation element from a pool of explanation resources, which are locally stored, according to the element identifier included in the element information; and a display unit, configured to display the target explanation element when the result of route planning, which corresponds to the request of route planning, is displayed.

In a fifth aspect, a computer device is provided according to an embodiment of the present disclosure. The computer device includes a processor and a memory, where the memory is configured to store program codes and transmit the program codes to the processor, and the processor is configured to perform the foregoing method in the first aspect or the second aspect according to instructions in the program code.

In a sixth aspect, a computer-readable storage medium is provided according to an embodiment of the present disclosure. The computer-readable storage medium is configured to store a computer program, and the computer program is configured to perform the foregoing method in the first aspect or the second aspect.

In a seventh aspect, a computer program product or a computer program is provided according to an embodiment of the present disclosure. The computer program product or the computer program includes computer instructions, and the computer instructions are stored in a computer-readable storage medium. A processor of a computer device reads the computer instructions from the computer-readable storage medium, and executes the computer instructions to configure the computer device to perform the foregoing method in the first aspect or the second aspect.

In an eighth aspect, a system for displaying a rout is provided according to an embodiment of the present disclosure. The system includes a terminal device and a server, where the server is configured to perform the foregoing method in the first aspect, and the terminal device is configured to perform the foregoing method in the second aspect.

In the foregoing technical solutions, when the request of route planning for the mode of route planning is obtained, the corresponding result of route planning and the original explanation data that may concern such result of route planning can be determined. The route explaining scenario, which corresponds to the original explanation data, and the mode of route planning serve as a query for retrieving the corresponding target explanation template. The target explanation element, which needs to be displayed when the terminal device displays the result of route planning, can be determined through the target explanation template, and the target explanation element is configured to explain the result of route planning. The various route planning modes and the various route explaining scenarios are decoupled through the foregoing explanation template, and hence can be independently maintained and updated. The hard-coding stage in conventional technology is not necessary, and only an explanation template of the corresponding combinations is required to be added when there is a new route explaining scenario. Each explanation template is independent and hence also facilitates update and maintenance. Moreover, the terminal device can implement display of the explanation elements only based on an instruction from the element information even in case of a new route explaining scenario. The troublesome code debugging and logic iteration are not necessary, reducing occupation on processing resources of the terminal device.

### BRIEF DESCRIPTION OF THE DRAWINGS

Figure 1 is a schematic diagram of an application scenario of a method for displaying a route according to an embodiment of the present disclosure.
Figure 2 is a diagram of signaling interaction in a system for displaying a route according to an embodiment of the present disclosure.
Figure 3 is a framework diagram of a system for displaying a route according to an embodiment of the present disclosure.
Figure 4 is a flowchart of updating an explanation template according to an embodiment of the present disclosure.
Figure 5 is a flowchart of updating an explanation template according to another embodiment of the present disclosure.
Figure 6a is a schematic diagram of an application scenario of a method for displaying a route according to an embodiment of the present disclosure.
Figure 6b is a schematic diagram of an application scenario of a method for displaying a route according to another embodiment of the present disclosure.
Figure 6c is a schematic diagram of an application scenario of a method for displaying a route according to another embodiment of the present disclosure.
Figure 7 is a flowchart of an application scenario of a method for displaying a route according to an embodiment of the present disclosure.
Figure 8 is a schematic diagram of determining element information according to an embodiment of the present disclosure.
Figure 9 is a framework diagram of displaying a target explanation element by a terminal device according to an embodiment of the present disclosure.
Figure 10 is a schematic diagram of an apparatus for displaying a route according to an embodiment of the present disclosure.
Figure 11 is a schematic diagram of an apparatus for displaying a route according to another embodiment of the present disclosure.
Figure 12 is a schematic diagram of a system for displaying a route according to another embodiment of the present disclosure.
Figure 13 is a schematic structural diagram of a server according to an embodiment of the present disclosure.
Figure 14 is a schematic structural diagram of a terminal device according to an embodiment of the present disclosure.

### DESCRIPTION OF EMBODIMENTS

Hereinafter embodiments of the present disclosure are described in conjunction with the drawings.

In conventional technology, when displaying a route in an electronic map, different combinations of route planning modes and route explaining scenarios correspond to different code logics. The increase in the route explaining scenarios and the route planning modes renders the code logic corresponding to the combinations of the two more and more complex. In conventional technology, routes are displayed through hard coding, which causes inconvenience in maintenance and updates of the codes. When there is a new route explaining scenario or a new route planning mode, both a server and a terminal device need to make modifications or additions in relevant protocol data, then iterate respective internal logic, and are eventually subject to joint adjustment to release a new version. An overall iteration efficiency is low.

A method for displaying a route and a related apparatus are provided according to embodiments of the present disclosure, so as to reduce complexity of the code logic and improve the iteration efficiency.

The method for displaying a route according to embodiments of the present disclosure is applicable to an electronic device which is capable to computing, processing, and displaying routes, such as a server or a terminal device. The method may be independently performed by the server or the terminal device. The method may alternatively be applied to a network scenario in which the terminal device communicates with the server, and be performed by the terminal device and the server in coordination. The terminal device may be a smartphone, a notebook computer, a desktop computer, an in-vehicle computer, a personal digital assistant (PDA), a tablet computer, or other devices. The server may be an application server or a web server. In actual deployment, the server may be an independent physical server, may be a server cluster or distributed system including multiple physical servers, or may be a cloud server providing cloud computing services. The terminal and the server may be directly or indirectly connected through a wired or wireless communication. The present disclosure is not limited to the foregoing cases.

In addition, the technical solutions according to embodiments of the present disclosure are further related to cloud technology, such as databases.

Databases may be approximately considered as an electronic file cabinet, that is, a location at which electronic files are stored. A user may manipulation, such as add, query, update, or delete data in the files. The so-called "database" refers to a set of data which is collectively stored in a particular manner, can be shared among multiple users, has minimum redundancy, and is independent of an application.

A database management system (DBMS) is a computer software system designed for managing a database, and generally has basic functions such as storage, interception, security, and backup. The database management system may perform classification through a database model which it supports, such as relational expressions and the extensible markup language (XML). Alternatively, the database management system may perform based on a computer type which it supports, such as a server cluster and a mobile phone. Alternatively, the database management system may perform classification based on a query language which it utilzes, such as a structured query language (SQL) and the Xquery. Alternatively, the database management system may perform classification perform classification according to a focus of a performance impulse, such as a peak scale and a peak operating speed. The database management system may perform classification in another manner. Some DBMSs are capable to support cross-category operation regardless the manner of classification, for example, may support multiple query languages.

In embodiments of the present disclosure, explanation templates are stored, queried, modified, and synchronized through the database.

In order to facilitate understanding of technical solutions of the present disclosure, hereinafter the method for displaying a route is illustrated in conjunction with actual application scenarios.

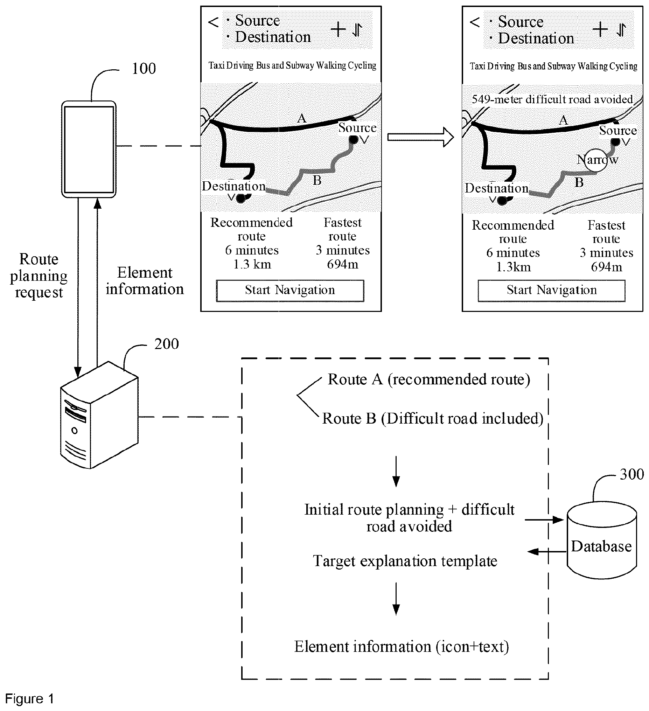

Reference is made to Figure 1, which is a schematic diagram of an application scenario of a method for displaying a route according to an embodiment of the present disclosure. As shown in Figure 1, a terminal device 100 and a server 200 are included. Herein the service 200 is taken as a main example of an entity executing the method for displaying a route, and accordingly the method for displaying a route is illustrated based on the scenario.

The server 200 receives a request of route planning transmitted by the terminal device 100, and the request of route planning is for a mode of route planning. The mode of route planning is configured to identify a cause for initiating the request of route planning. For example, various causes, such as route deviation in navigation, switching between main and auxiliary roads, changing a user's preference, and adding or removing a stop, would trigger to initiate a new request of route planning.

The server 200 determines a corresponding result of route planning and corresponding original explanation data according to the request of route planning for the mode of route planning. The server 200 may compute the corresponding result of route planning based on a source and a destination carried in the request of route planning. The result of route planning includes a planned route from the source to the destination. The original explanation data is explanation data that may concern the planned route, and includes a corresponding route explaining scenario. For example, the route explaining scenario is whether the planned route avoids traffic jam, whether the planned route includes mountain roads, whether the planned route avoids mountain roads, whether the planned route avoids road closures, whether the planned route avoids difficult roads, or the like. As shown in Figure 1, a result of route planning including two routes are determined for driving route planning from a source to a destination, and the two routes are route A that takes 6 minutes and 1.3 km and route B that takes 3 minutes and 694 m, respectively. Since the route B includes difficult roads, the route A serves as a recommended route while the route B serves as a secondary route for reference.

As mentioned above, the mode of route planning may indicate a cause for initiating the request of route planning. Hence, different results of route planning may be determined based on different modes of route planning even for the same source and the same destination. For example, different user preferences, modification on intermediate stops, or the like would all lead to different routes in the result of route planning. Different results of route planning may require explanation elements of different types (which correspond to route explaining scenarios) to explain a reason of the planning.

Further, even if the same route explaining scenario is determined based on the result of route planning, explanation elements which actually need to be displayed are different under different modes of route planning. For example, for the same route explaining scenario, an explanation element displayed when initial route planning (the first route planning) is identified may be different from an explanation element displayed under a mode of in-navigation route planning.

On such basis, an explanation template may be correspondingly defined based on a combination of the mode of route planning and the route explaining scenario. Rules and demands of displaying the explanation element(s) for different combinations may be determined through the explanation template.

Hence, the server 200 may determine a target explanation template corresponding to the combination, of the mode of route planning and the route explaining scenario that corresponds to the original explanation data, based on the mode of route planning and the route explaining scenario. The scenario as shown in Figure 1 is taken as an example. The mode of route planning is the initial route planning, and the route explaining scenario corresponding to the original explanation data is avoiding difficult roads. The server 200 may use the avoiding difficult roads and the initial route planning as a query, and search the database 300 for the target explanation template corresponding to such combination.

The server 200 determines element information according to the original explanation data and the target explanation template, and transmits the element information to the terminal device 100 as an explanation for the determined result of route planning. The element information includes an element identifier corresponding to a target explanation element in the result of route planning. The element identifier is configured to indicate display of the target explanation element when the terminal device 100 displays the result of route planning. For example, there is a 549-meter difficult road in the route B. The target explanation element has an element identifier for explaining the difficult road. When displaying the result of route planning, an icon corresponding to the difficult road (the word "narrow" in a circle) and text ("549-meter difficult road avoided"), and the like, are displayed along with the route B. Therefore, it is convenient for the user of the terminal device 100 to understand why the recommended route in the current result of route planning is the route A while the route B serves as the secondary route for reference. Accordingly, the terminal device 100 receives the element information transmitted by the server 200 and displays corresponding content at a position corresponding to the result of route planning. Even there is a new route explaining scenario, the terminal device 100 can implement display of the explanation element merely under instruct of the element information. The troublesome code debugging and logic iteration are not necessary, which reduces occupation on processing resources of the terminal device 100.

For different combinations formed by the route planning modes and the route explaining scenarios, the technical solutions according to embodiments of the present disclosure does not utilize hard-coding to implement corresponding code logic. Rather, different combinations are stored in advance in a form of different explanation templates, such that the combinations of various route planning modes and various route explaining scenarios are decoupled and can be independently maintained and updated. In addition, when there is a new route explaining scenario, it is only necessary add explanation templates of corresponding new combinations. It is also convenient to update and maintain each independent explanation template.

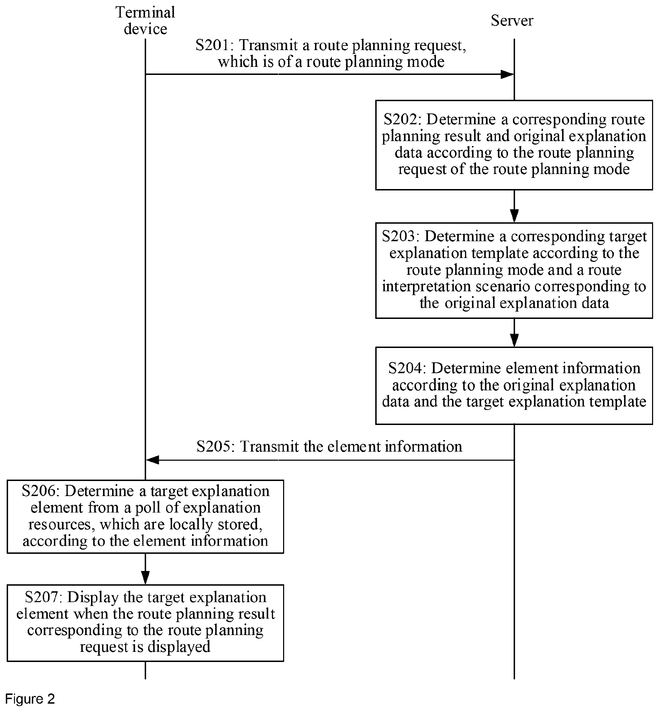

Reference is made to Figure 2. Figure 2 is a diagram of signaling interaction in a system for displaying a route according to an embodiment of the present disclosure. As shown in Figure 2, the system for displaying a route includes a terminal device and a server. The terminal device is mainly configured to display ae result of route planning and a target explanation element. The server is mainly configured to call a target explanation template, determine element information, deliver the element information, and the like.

In step S201, the terminal device transmits a request of route planning, which is for a mode of route planning.

The terminal device transmits the request of route planning to the server, so that the server computes a corresponding result of route planning according to the request of route planning. For example, the terminal device may transmit the request of route planning, which carries a source, a destination, and a stop, to the server. Correspondingly, the server can calculate one or more routes linking the source, the destination, and the stop based on the source, the destination, and the stop carried in the request of route planning.

Setting a stop is a typical mode of route planning. Even if the source and the destination are unchanged, the obtained result of route planning may be different when different stops are configured. Thus, the terminal device may transmit the request of route planning based on the mode of route planning under which the terminal device is operating.

Herein timing of transmitting the request of route planning is not limited. The request of route planning may be transmitted in response to active trigger of user. Alternatively, the request of route planning may be transmitted based on positional change of the terminal device, a change of a road condition, periodicity, or another cause.

There are various typical modes of route planning. Generally, there are two types of transmission with respect to timing of the terminal device transmitting the request of route planning to the server. A first type is initial route planning for a designated source and a designated destination, a second type is route planning in navigation, and the two types correspond to two different timing of transmitting the request of route planning. Correspondingly, the modes of route planning can be divided into two categories, i.e., a home plan-page mode and an in-navigation mode. The home plan-page mode refers to that the terminal device transmits the request of route planning to the server before travelling, and is configured to identify the cause that the request of route planning is initiated before navigation. The in-navigation mode refers to that the terminal device transmits the request of route planning to the server during navigation, and is configured to identify the cause that the request of route planning is initiated during the navigation. The two categories are further divided into various modes of route planning, as shown in Table 1. For example, "Hint" may refer to a mode of switching between main and auxiliary roads in the home plan-page mode or a mode of switching between main and auxiliary roads in the in-navigation mode, and "Ph" may refer to a mode of route deviation in navigation.

**Table 1 Modes of route planning and corresponding description**

| Before / During Travel | Mode of route planning | Description |
|---|---|---|
| Home plan-page mode | Nil | Initial route planning |
| | Hint | Switching between main and auxiliary roads |
| | Fr | User's active refreshing |
| | Addviapoint | Adding a stop |
| | Removeviapoint | Removing a stop |
| | Up | Inaccurate source |
| | Prefchange | Preference change: restriction and license plates |
| In-navigation mode | Hint | Switching between main and auxiliary roads |
| | Ph | Route deviation |
| | Fr | User's active refreshing |
| | Fork | Erroneous passing at a fork road |
| | Addviapoint | Removing a stop |
| | Removeviapoint | Inaccurate source |
| | Routerefresh | Traffic flow refreshing, road condition refreshing, dynamic route changing |
| | Prefchange | Preference change: restriction and license plates |

In step S202, the server determines a corresponding result of route planning and original explanation data according to the request of route planning, which is for the mode of route planning.

After the server receives the request of route planning, which is for the mode of route planning and transmitted by the terminal device, the corresponding result of route planning can be computed based on the source and the destination carried in the request of route planning, the mode of route planning, and the like. How to compute the result of route planning can be transformed into a mathematical problem. A corresponding ranking recommendation model is trained through deep learning and other algorithms, in conjunction with user's preference and route features of multiple aspects, and through configuring some objective functions, for example, one or more objective functions concerning the least time spent on the route, the shortest route distance, and the least traffic lights required to pass. The K results of route planning with highest ranks are computed through the model, transmitted directly to the terminal device, and displayed to a user. For example, the K results of route planning, which are computed through the ranking recommendation model and have the highest ranks, may serve as the multiple routes displayed on the home plan-page (the first page presenting plans).

When the K results of route planning are displayed to the user as routes on a map, one of the routes would serve as a recommended route which is highlighted. Generally, the remaining (K-1) routes are secondary routes for reference and are displayed in darker shades, such that the user can switch among the routes, which improves user's experience. As shown in Figure 1, two results of route planning are displayed to the user as two routes on the map, i.e., the route A and the route B. The route A is the recommended route, and the route B is an secondary route for reference.

Sometimes the user sometimes may be confused on the recommended route, for example, why the recommended route is detoured and why the recommended route is not familiar. The user may have a negative impression when cannot comprehend the logic of the recommendation, for example, may consider that a non-recommended route including a highway apparently is both shorter and more time-saving, that the route planning is unreliable, and that abandon the product thereafter. Hence, the server would not only determine the corresponding result of route planning, but also determine original explanation data according to the request of route planning that is for the mode of route planning. The original explanation data is configured to explain for potential questions that may concerned the planned route, for example, explain that the planned route is a detoured for avoiding a traffic jam or a difficult road, that a familiar route is not recommended due to a section under construction, or that a highway route which is shorter and more time-saving is not recommended due to closure. The original explanation data can induce the user to trust the recommended routes, and thereby improve a degree of participation and completion of the user on navigation.

In step S203, a corresponding target explanation template is determined according to the mode of route planning and a route explaining scenario corresponding to the original explanation data.

Some explanation elements, such as icons and text, may be provided when displaying the result of route planning, such that the result of route planning with the original explanation data is more intuitive and comprehensible to the user. Thereby, more interpretation information is capable to be displayed within a limited display range of an interface of the terminal device. The original explanation data includes the corresponding route explaining scenario. For example, the route explaining scenario may be whether the planned route avoids a traffic jam, whether the planned route includes a mountain road, whether the planned route avoids a mountain road, whether the planned route avoids a road closure, whether the planned route avoids a difficult road, etc.

Different route explaining scenarios may require explanation elements of different types to implement the explanation. Even for the same source and the same destination, different results of route planning may be obtained based on different modes of route planning, and correspondingly explanation elements of different types are required to implement the explanation. Thus, the target explanation template may be correspondingly determined through coordination between the mode of route planning and the route explaining scenario, in order to obtain the required explanation element(s). Content of the explanation template mainly defines some control items required by the explanation element(s). For example, the control items may be information on, for example, whether to present a relevant explanation element, default content of text, a priority, a style, etc. The explanation element(s) required for different combinations can be flexibly configured by modifying the control items in the explanation template. It is not necessary that both the server and the terminal device modifies or add relevant protocol data, and thereby cumbersome stages such as code debugging and adjusting iteration logic are removed to achieve fast iteration. Table 2 shows the content of the explanation template and corresponding description.

**Table 2 Content of the explanation template and corresponding description**

| Field | Description | Field | Description |
|---|---|---|---|
| Need_tips | Whether a tip is presented | Need_marker | Whether a marker is presented |
| Tips_icon | Icon of a tip | Marker_icon | Icon of a marker |
| Tips_title | Default title of a tip | Marker_priority | Priority of a marker |
| Tips_content | Default content of a tip | Marker_disappear | A marker disappears after being passed |
| Tips_priority | Priority of a tip | Marker_cloud_key | Style of a marker |
| Tips_cloud_key | Style of a tip | Marker_clickable | Whether a marker is clickable |
| Need_bubble | Whether a bubble is presented | Need_line | Whether a line is presented |
| Bubble_content | Content of a bubble | Line_cloud_key | Style of a line |
| Bubble_icon | Icon of a bubble | Line_priority | Priority of a line |
| Bubble_cloud_key | Style of a bubble | Need_area | Whether an area is presented |
| Bubble_priority | Priority of a bubble | Area_cloud_key | Style of an area |
| Bubble_disappear | A bubble disappears after being passed e | Area_priority | Priority of an area |

The explanation elements and a manner of presenting the explanation elements are defined by templates. Thereby, the server is enabled to control presentation of the explanation elements flexibly, and the presentation logic is standardized based on the explanation templates. Since the flexible control on the presentation of the explanation elements is achieved, that the presentation cannot be modified for a released version is no longer a problem. It is only required to add the explanation templates corresponding to the new combinations when there are new route explaining scenarios and new modes of route planning. Moreover, it is convenient to maintain and update each independent explanation template.

In step S204, element information is determined according to the original explanation data and the target explanation template.

The element information includes an element identifier of a target explanation element which corresponds to the result of route planning. The target explanation element represents a displayed form of the explanation element(s) required for the result of route planning. The element identifier of the target explanation element is an index of such displayed form in a pool of explanation resources in the terminal device. For example, in a case that Sam wishes going to a supermarket, the target explanation element may be a prompt (a tip) indicating whether the supermarket is open or closed, and such target explanation element can be obtained from the pool of explanation resources by using the element identifier corresponding to such prompt.

Most content of the element information has already been defined in the target explanation template. When constructing the required element information, it is only necessary to compute whether the element information transmitted to the terminal device is issued, and determine a style, specific text, and other aspects of the element information according to the target explanation template and the original explanation data. Thereby, a manner of rendering and displaying the element information in the terminal device is determined.

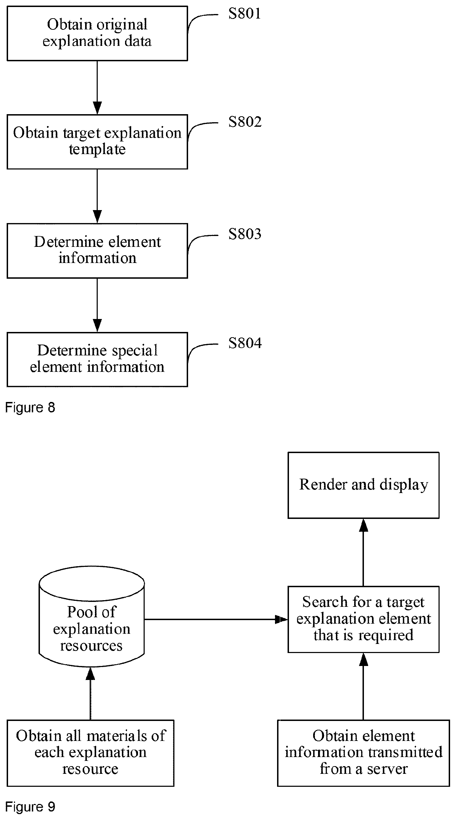

In some special route explaining scenarios, special element information needs to be correspondingly obtained from an external service. Reference is made to Figure 8, which is a schematic diagram of determining element information according to an embodiment of the present disclosure.

In step S801, original explanation data is obtained.

In step S802, a target explanation template is obtained.

In step S803, element information is determined.

In step S804, special element information is determined.

In special route explaining scenarios such as road restrictions or road closures, it is necessary to call an external service according to information of a road concerning the route explaining scenario in the original explanation data, so as to obtain detailed information of the road restriction or the road closure. Then, the corresponding target explanation template is converted into special element information, such as a restricted line, a restricted area, or a prompt of the road closure.

In step S205, the server transmits the element information to the terminal device.

The server transmits the element information to the terminal device, so that the terminal device can obtain the target explanation element through the element information and then display the target explanation element when displaying the result of route planning.

In S207, the terminal device determines the target explanation element from a pool of locally stored explanation resources according to the element information.

After obtaining the element information transmitted by the server, the terminal device searches the pool of explanation resources for the target explanation element according to the element information. The pool of explanation resources is locally stored at the terminal device, s includes various element materials of the elements required in explanation, and is indexed by the element identifiers. For example, the element materials represent a manner of presenting the explanation element, such as a background color, a font size, spacing, a background image, an icon, or other data.

Thereby, the terminal device can determine the required target explanation element through the element information transmitted by the server, and it is not necessary that the terminal device implements relevant logics such as whether, what style, and what priority the explanation element is to be presented. The relevant logics are all implemented in the server. The terminal device focuses only on a manner of rendering and displaying the explanation elements and a logic of overlaying the explanation elements, and not on which service the explanation elements is to be obtained from. Thereby, the terminal device is more lightweight, and processing within the terminal device is simplified.

In step S207, the terminal device displays the target explanation element when displaying the result of route planning corresponding to the request of route planning.

Reference is made to Figure 9, which is a framework diagram of displaying a target explanation element by a terminal device according to an embodiment of the present disclosure. The terminal device may obtain various element materials of all explanation elements in advance. For example, when being activated, the terminal device obtains various element materials of all explanation elements and constructs the pool of explanation resources by using all the element materials, and stores the pool locally in the terminal device for subsequent usage.

After the server transmits the element information to the terminal, the terminal device searches the pool of explanation resources for the required target explanation element according to the element information. When displaying the result of route planning, the target explanation element is rendered and displayed within the result of route planning, such that the explanation element and the result are simultaneously presented to a user.

After the terminal device obtains the target explanation element, a position corresponding to the target explanation element can be calculated according to the result of route planning. The target explanation element is displayed at the corresponding position when displaying the result of route planning corresponding to the request of route planning.

In the foregoing technical solutions, when the request of route planning for the mode of route planning is obtained, the corresponding result of route planning and the original explanation data that may concern such result of route planning can be determined. The route explaining scenario, which corresponds to the original explanation data, and the mode of route planning serve as a query for retrieving the corresponding target explanation template. The target explanation element, which needs to be displayed when the terminal device displays the result of route planning, can be determined through the target explanation template, and the target explanation element is configured to explain the result of route planning. The various route planning modes and the various route explaining scenarios are decoupled through the foregoing explanation template, and hence can be independently maintained and updated. The hard-coding stage in conventional technology is not necessary, and only an explanation template of the corresponding combinations is required to be added when there is a new route explaining scenario. Each explanation template is independent and hence also facilitates update and maintenance. Moreover, the terminal device can implement display of the explanation elements only based on an instruction from the element information even in case of a new route explaining scenario. The troublesome code debugging and logic iteration are not necessary, reducing occupation on processing resources of the terminal device.

The foregoing technical solutions may is applicable to different map products. For example, a type of the map product may be a mobile-phone map, a Pangu map software development kit (SDK), a vehicle telematics map, or the like. Different map products may have different requirements on explaining the result of route planning. Due to differences in display manners and installation positions, different map products may require displaying different explanation elements even under the same mode of route planning and the same route explaining scenario. Therefore, it is necessary to define the explanation template(s) respectively for each map product. Information related to a map product type may be further added into the request of route planning transmitted by such map product, in order to obtain the target explanation template corresponding to such request of route planning. Accordingly, the target explanation template can be determined based on a combination of three attributes, i.e., the mode of route planning, the route explaining scenario, and the type of the map product. Since the type of the map product is added for determining the target explanation template, different requirements of the different map products can be met through modifying explanation templates or adding new explanation templates. Thereby, different map products can not only adjust and test their own templates independently, but also share the exaltation for the result of route planning.

For example, the explanation template is uniquely determined by the three attributes, i.e., the mode of route planning, the route explaining scenario, and the type of the map product. In such case, a triplet can be used to define a key of the explanation template, that is, Key = < type of map product, mode of route planning, route explaining scenario>. For example, Table 3 shows some map product types, Table 1 shows some modes of route planning, and Table 4 shows some route explaining scenarios. In a case that the key is "Mobile_Nil_0", it indicates that the type of the map product is the mobile-phone map, the mode of route planning is the initial route planning, and the route explaining scenario is avoiding road closure.

**Table 3 Type of map product and description**

| Map product type | Description |
|---|---|
| Mobile | Mobile-phone map |
| Pangu | Pangu map software development kit |
| Wecar | Vehicle telematics map |

**Table 4 Route explaining scenario and description**

| Route explaining scenario | Description |
|---|---|
| 0 | Avoiding road closure |
| 1 | Passing road closure |
| 2 | Avoiding traffic jam |

When displaying the result of route planning, the most basic service is displaying the result of route planning. A service of explaining the result of route planning may be further achieved on a basis of such basic service. Thereby, the result of route planning and the element information may be transmitted to the terminal device in two successive steps, respectively. The terminal device is capable to display the result of route planning even when the element information cannot be obtained.

After the server determines the result of route planning according to the request of route planning, the result of route planning is returned to the terminal device first, so that the terminal device can display the result of route planning. The server further stores a correspondence between a route planning identifier (RPID) of the result of route planning and the element information. After the terminal device obtains the result of route planning returned from the server, a request for explanation service may be transmitted to the server based on the route planning identifier included in the result of route planning. After obtaining the request for explanation service, the server can retrieve the element information corresponding to the route planning identifier according to the route planning identifier, which is included in the request, and the previously stored correspondence. Then, the server transmits the element information to the terminal device, and the terminal device displays the target explanation element when displaying the result of route planning.

The terminal device transmits the request of route planning and the request for explanation service to the server in two steps, respectively. Thereby, the server calls the two results, i.e., the result of route planning and the element information, in two processes, and transmits the two processes the terminal device in two steps, respectively. When the terminal device cannot obtain the element information, the terminal device is still capable to display the result of route planning normally. It would not take place that the terminal device is incapable to obtain any result due to lack of the element information. Stability of the system is ensured, and a possibility of successful display is improved for the terminal device.

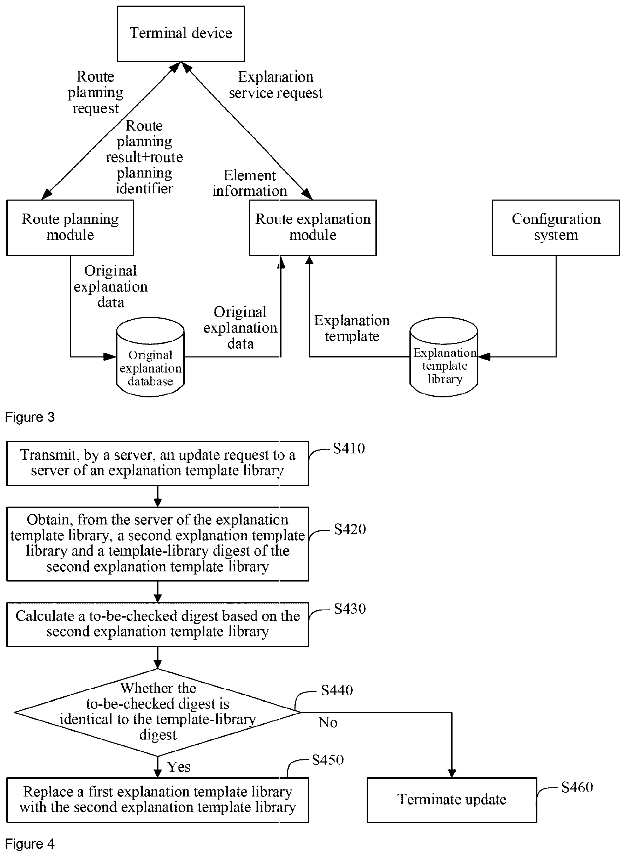

Hereinafter an embodiment is illustrated to facilitate those skilled in the art understanding the technical solutions in the present disclosure. Reference is made to Figure 3, which is a framework diagram of a system for displaying a route according to an embodiment of the present disclosure.

In order to separate a route planning service and a route explanation service, a route planning module and a route explanation module may be configured in the server. The route planning module is configured to return the result of route planning, and the route explanation module is configured to return the element information. Specifically, every time the terminal device transmits the request of route planning, the route planning module may determine the corresponding result of route planning according to the request of route planning. In a case that the current result of route planning concerns the original explanation data, the route planning module would generate the route planning identifier corresponding to the result of route planning, and return the result of route planning along with the corresponding route planning identifier to the terminal device.

The route planning module writes the original explanation data corresponding to the route planning identifier into an original explanation database. The original explanation database may be a remote dictionary server (Redis) database, which is not limited herein.

After obtaining the request for explanation service transmitted by the terminal device, the route explanation module retrieves the corresponding original explanation data from the original explanation database according to the route planning identifier included in the request for explanation service, and obtains the mode of route planning and the route explaining scenario are obtained according to the retrieved original explanation data. Generally, the route explanation module obtains all explanation templates from an explanation template library in advance, and determines the corresponding target explanation template from all the templates according to the mode of route planning and the route explaining scenario. The explanation template library may be constructed and maintained through an external configuration system.

The route explanation module determines the element information according to the original explanation data and the target explanation template, and transmits the element information to the terminal device.

The explanation template library may be independent and may be maintained and operated in the external configuration system. Thereby, developers are able to focus only on how to use the explanation template to implement an explanatory internal logic, and do not need to maintain specific content of the templates. On the other hand, product personnel and operation personnel are able to modify the content of the templates flexibly through the external configuration system, and do not need to care about how to use the template content. A system can be properly divided based on different focuses, so as to achieve highly effective coordination.

The explanation templates corresponding to the combinations keeps increasing with the increasing modes of route planning and the increasing route explaining scenarios. After the explanation template is added or modified through the external configuration system, the updated template data needs to be synchronized to the server to ensure data consistency. Herein the data consistency may be implemented through hot, double-buffered full synchronization, so as to ensure that the services are not interrupted during synchronization. A first explanation template library and a second explanation template library are constructed in a cache of the server. The target explanation template may be determined from the explanation templates in the first explanation template library.

Reference is made to Figure 4, which is a flowchart of updating an explanation template according to an embodiment of the present disclosure.

In step S410, the server transmits an update request to an explanation template library server.

The route planning only requires data consistency kept within a period of time. The server may be configured to transmitting the update request to the explanation template library server at an interval to keep the data consistency between the two. It is appreciated that in practice the explanation template library may be configured to deliver the updated explanation template(s) to the server periodically and actively.

In step S420, a second explanation template library and a template library digest corresponding to the second explanation template library are obtained from the explanation template library server.

The server obtains the second explanation template library and the template library digest corresponding to the second explanation template library from the explanation template library at the explanation template library server.

In step S430, a to-be-checked digest is computed according to the second explanation template library.

The server may fail to obtain the second explanation template library or obtain an incomplete second explanation template library in the last step, which renders the explanation templates in the obtained second explanation template library different from those in the explanation template library. Hence, the server may compute the to-be-checked digest according to the obtained second explanation template library, and then compare the to-be-checked digest with the obtained template library digest corresponding to the second explanation template library.

In step S440, it is determined whether the to-be-checked digest is identical to the template library digest. The process proceeds to step S450 in case of positive determination, and processed to step S460 in case of negative determination.

In step S450, a first explanation template library is replaced with the second explanation template library (in case of being identical).

The to-be-checked digest being identical to the template library digest indicates that that content of the second explanation template library is the same as that of the explanation template library. Hence, the first explanation template library can be replaced with the second explanation template library to implement the update.

In step S460, the update terminates (in case of being different).

The to-be-checked digest being different from the template library digest indicates that the obtained second explanation template library may be damaged. Hence, the updating needs to terminate.

The first explanation template library and the second explanation template library are configured in the cache of the server, and the first explanation template library would not be replaced with the second explanation template library unless the explanation templates in the second explanation template library are determined to be identical to those in the explanation template library. During the foregoing replacement, the first explanation template library may keep providing the service of explaining the result of route planning to the server. Therefore, the service for explaining the result of route planning is not interrupted while implementing the data consistency.

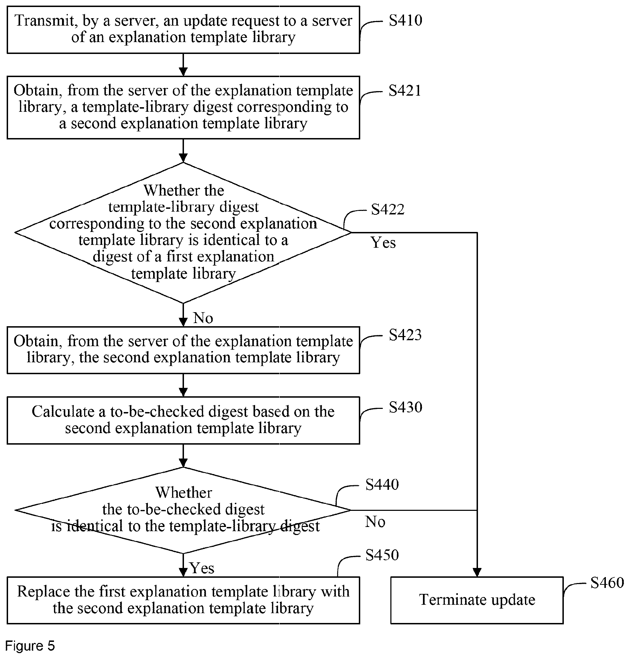

Since the server is not aware of whether the explanation templates in the explanation template library are modified or added, it may be determined whether the second explanation template library has changed, before obtaining the second explanation template library, so as to save computation resources. In a case that the second explanation template library is different from the first explanation template library, the second explanation template library is used to update the first explanation template library. Reference is made to Figure 5, which is a flowchart of updating an explanation template according to another embodiment of the present disclosure. The step S420 can be implemented through steps S421 to S423, which are illustrated hereinafter.

In step S421, the template library digest corresponding to the second explanation template library is obtained from the explanation template library server.

In step S422, it is determined whether the template library digest corresponding to the second explanation template library is identical to a digest of the first explanation template library. The process proceeds to step S460 in case of positive determination, and processed to step S423 in case of negative determination.

In step S460, the update terminates (in case of being identical).

In step S423, the second explanation template library is obtained from the explanation template library server (in case of being different)

In order to better maintain and update the explanation templates and the original explanation data, explanation elements in the explanation template and the original explanation data can be conformed to a protocol. For example, a constitutional unit of the explanation elements may be determined based on a category of the explanation elements, such as a point, a line, and an area. Specifically, the constitutional unit may be a field, such as a line string, a point string, text, and a possible ID list, which is extracted from a combination of the mode of route planning and the route explaining scenario. The point string may refer to all candidate status concerning an explanation element of the point category, for example, may refer to a round point and a square point. The server constructs a route explanation protocol according to the constitutional units, and determines the original explanation database and the first explanation template library including the target explanation template according to the route explanation protocol. When being conformed to the protocol through the constitutional units, the explanation elements required for the explanation template and the original explanation data can be provided via an interface. Hence, it is implemented that the route planning module and the route explanation module are decoupled in the server and can be independently maintained and updated.

The target explanation template includes the constitutional unit(s), the content, the style, and the priority, of the explanation element which is to be displayed.

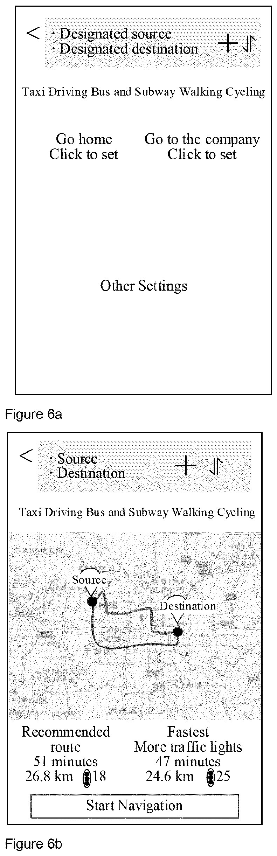

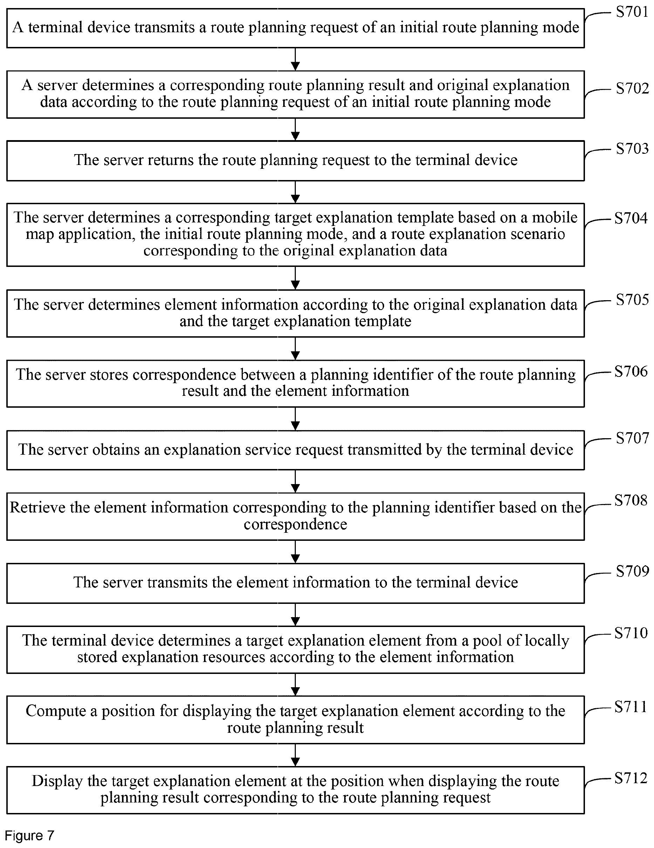

Hereinafter the method for displaying a route provided according to embodiments of the present disclosure is illustrated based on a scenario in combination with Figures 6a-6c and Figure 7 to facilitate better understanding.

Reference is made to Figures 6a to 6c, which are schematic diagrams of an application scenario of a method for displaying a route according to an embodiment of the present disclosure. As shown in Figure 7, the method for displaying a route includes the following steps S701 to S712.

In step S701, a terminal device transmits a request of route planning, which is for a mode of initial route planning.

As shown in Figure 6a, after opening a mobile-phone map application through the terminal device, a user may enter a designated source and a designated destination in a search box, and choose a travelling manner form candidates such as taxi, driving, bus and subway, walking, and cycling. The terminal device generates and transmits the request of route planning to the server according to an operation of the user. As shown in Figure 6a, the display page further provides configurations for frequently-used locations such as home and company, as well as other configurations, in order to facilitate the user adding or modifying the mode of route planning.

In step S702, a server determines a corresponding result of route planning and original explanation data according to the request of route planning which is for the mode of initial route planning.

The server determines two routes according to the designated source and the designated destination. The two routes are route A, which takes 51 minutes and 26.8 kilometers and passes 18 traffic lights, and route B, which takes 47 minutes and 24.6 kilometers and passes through 25 traffic lights. The result of route planning may further concern the original explanation data, for example, vehicle restrictions and Beijing entry of passenger vehicles from other provinces, other districts, or other cities.

In step S703, the server transmits the result of route planning to the terminal device.

The result of route planning is first returned to the terminal device to ensure that the terminal device can at least display the result of route planning normally. That is, even when there is an anomaly in any of the steps in S704 to S712, normal display of the result of route planning can still be guaranteed. Figure 6b shows a schematic diagram of an interface that only displays the result of route planning.

In step S704, the server determines a corresponding target explanation template according to the mobile-phone map application, the mode of initial route planning, and a corresponding route explaining scenario corresponding to the original explanation data.

A triplet composed of the type of the map product, the mode of route planning, and the route explaining scenario corresponding to the original explanation data serves as a basis for retrieving a required target explanation template.

In step S705, the server determines element information according to the original explanation data and the target explanation template.

Information such as whether to present, default text, priority, a style, and other information are calculated for a target explanation element according to the original explanation data and target template explanation data.

In step S706, the server stores a correspondence between a route planning identifier of the result of route planning and the element information.

In step S707, the server obtains a request for explanation service, which is transmitted by the terminal device, where the explanation service request includes the route planning identifier of the result of route planning.

In step S708, the element information corresponding to the route planning identifier is retrieved according to the correspondence.

In step S709, The server transmits the element information to the terminal device.

In step S710, The terminal device determines a target explanation element from a pool of explanation resources, which are locally stored, according to the element information.

In step S711, a display position corresponding to the target explanation element is computed according to the result of route planning.

In step S712, the target explanation element is displayed at the corresponding display position when displaying the result of route planning corresponding to the request of route planning.

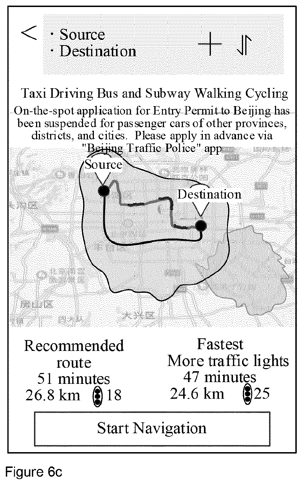

In a case that the system is stable, the target explanation element can be displayed at the corresponding display position. For example, relevant prompts about vehicle restrictions or about Beijing entry of passenger vehicles from other provinces, other districts, or other cities are indicated through an element of an area type. As shown in Figure 6c, an area element covering a larger region indicates a vehicle restricted region, and prompts a vehicle to choose to detour or not according to a tip on restriction. An area element covering a smaller region indicates an administrative region not belonging to Beijing, and that a passenger car from other provinces, other districts, or other cities needs an Entry Permit to Beijing when exiting from such region. Text may be further utilized as a tip besides prompting through the area elements. For example, the text "On-the-spot application for Entry Permit to Beijing has been suspended for passenger cars of other provinces, districts, and cities. Please apply in advance via 'Beijing Traffic Police" app" is utilized to help the user plan in advance. Moreover, a traffic jam in the route may be indicated through an element of a line type, and different severance degrees of the traffic jam may be further indicated through different colors.

An apparatus for displaying a route is further provided according to an embodiment of the present disclosure, and corresponds to the method in the foregoing embodiments.

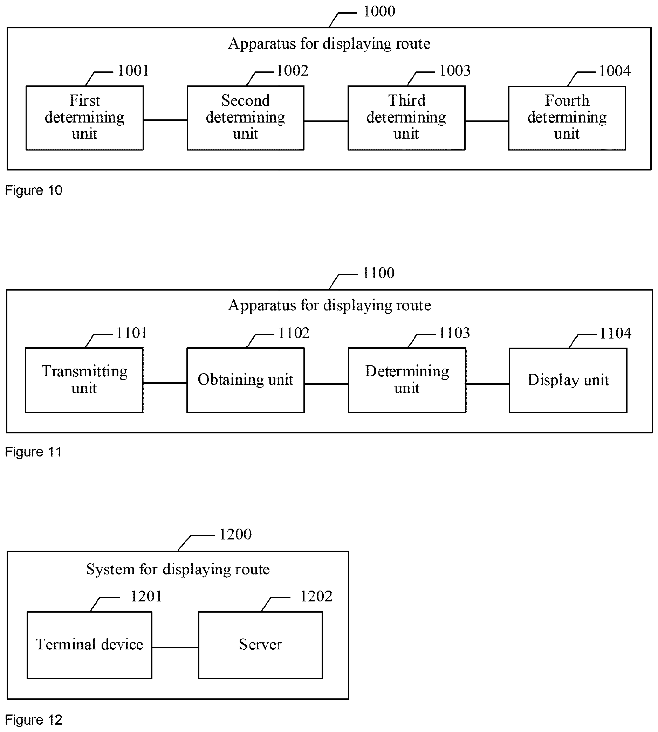

Reference is made to Figure 10, which is a schematic diagram of an apparatus for displaying a route according to an embodiment of the present disclosure. The apparatus 1000 includes a first determining unit 1001, a second determining unit 1002, a third determining unit 1003 and a fourth determining unit 1004.

The first determining unit 1001 is configured to determine a corresponding result of route planning and original explanation data according to a request of route planning, which is for a mode of route planning, where the mode of route planning is configured to identify a cause for initiating the request of route planning.

The second determining unit 1002 is configured to determine a corresponding target explanation template according to the mode of route planning and a route explaining scenario corresponding to the original explanation data.

The third determining unit 1003 is configured to determine element information according to the original explanation data and the target explanation template, where the element information includes an element identifier of a target explanation element corresponding to the result of route planning.

The fourth determining unit 1004 is configured to transmit the element information to a terminal device, where the element identifier in the element information is configured to indicate display of the target explanation element when the terminal device displays the result of route planning.

In one embodiment, the request of route planning further includes a type of a map product through which the request of route planning is transmitted. The second determining unit 1002 is configured to determine the corresponding target explanation template according to the type of the map product, the mode of route planning, and the route explaining scenario corresponding to the original explanation data.

In one embodiment, the target explanation template is determined from explanation templates included in a first explanation template library. The apparatus 1000 is further configured to: obtain a second explanation template library and a template library digest corresponding to the second explanation template library from an explanation template library server; compute a to-be-checked digest according to the second explanation template library; and replace the first explanation template library with the second explanation template library in a case that verification based on the to-be-checked digest and the template library digest corresponding to the second explanation template library is passed.

In one embodiment, the apparatus 1000 is further configured to: determine a constitutional unit of an explanation element based on a type of the explanation element; construct a route explanation protocol according to the constitutional unit; and determine the original explanation data and a first explanation template library including the target explanation template according to the route explanation protocol.

In one embodiment, the target explanation template includes a constitutional unit, content, a style, and a priority, of an explanation element which is to be displayed.

In an embodiment, the apparatus 1000 is further configured to: return the result of route planning to the terminal device; store a correspondence between a route planning identifier of the result of route planning and the element information; obtain a request for explanation service, which is transmitted by the terminal device, where the request for explanation service carries the route planning identifier; and retrieve the element information corresponding to the route planning identifier according to the correspondence, before transmitting the element information to the terminal device.

An apparatus for displaying a route is further provided according to an embodiment of the present disclosure. Reference is made to Figure 11, which is a schematic diagram of an apparatus for displaying a route according to an embodiment of the present disclosure. The apparatus 1100 includes a transmitting unit 1101, an obtaining unit 1102, a determining unit 1103 and a display unit 1104.

The transmitting unit 1101 is configured to transmit a request of route planning, which is for a mode of route planning, to a server, where the mode of route planning is configured to identify a cause for initiating the request of route planning.

The obtaining unit 1102 is configured to obtain element information returned by the server, where the element information includes an element identifier, and the element identifier is configured to indicate display of a target explanation element when the terminal device displays a result of route planning.

The determining unit 1103 is configured to determine the target explanation element from a pool of explanation resources, which are locally stored, according to the element identifier included in the element information.

The display unit 1104 being configured to display the target explanation element when the result of route planning, which corresponds to the request of route planning, is displayed.

In one embodiment, before obtaining the element information returned by the server, the apparatus 1100 is further configured to: obtain a result of route planning returned by the server, where the result of route planning carries a corresponding route planning identifier; and transmit a request for explanation service to the server according to the route planning identifier, where the request for explanation service is configured to request obtaining the element information from the server.

In one embodiment, the mode of route planning is configured to identify the cause for initiating route planning before navigation, or the cause for initiating route planning during navigation. The transmitting unit 1101 is configured to: transmit the request of route planning to the server in a case that initial route planning is initiated for a designated source and a designated destination, or in a case that route planning is initiated during the navigation.

In one embodiment, the apparatus 1100 is further configured to compute a display position corresponding to the target explanation element according to the result of route planning. The display unit 1104 is configured to display the target explanation element at the display position when the result of route planning corresponding to the request of route planning is displayed.

A system for displaying a route is further provided according to an embodiment of the present disclosure. As shown in Figure 12, the system 1200 includes a terminal device 1201 and a server 1202. The terminal device 1201 is configured to perform the method for displaying a route, which is performed at a terminal device side, in the foregoing embodiments. The server 1202 is configured to perform the method for displaying a route, which is performed at a server side, in the foregoing embodiments.

A computer device is further provided according to an embodiment of the present disclosure. Hereinafter the computer device is illustrated from a perspective of hardware.

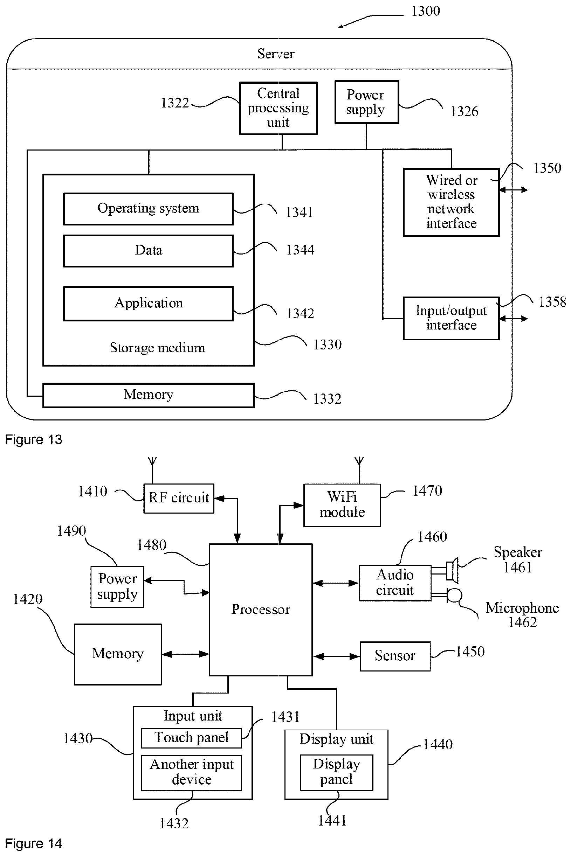

Reference is made to Figure 13, which is a schematic structural diagram of a server according to an embodiment of the present disclosure. The server 1300 may vary greatly due to different configurations or performance, and may include one or more central processing units (CPUs) 1322 (for example, one or more processors), a memory 1332, and one or more storage media 1330 (for example, one or more mass-storage devices) that store an application program 1342 or data 1344. The memory 1332 and the storage medium 1330 may be a transient memory or a persistent memory. A program stored in the storage medium 1330 may include one or more modules (not depicted), and each module may include a series of instruction operations in the server. Further, the CPU 1322 may be configured to communicate with the storage medium 1330 to execute the series of instruction operations in the storage medium 1330 on the server 1300.

The server 1300 may also include one or more power supplies 1326, one or more wired or wireless network interfaces 1350, one or more input/output interfaces 1358, and/or, one or more operating systems 1341 such as Windows ServerTM, Mac OS XTM, UnixTM, LinuxTM, and FreeBSDTM.

The steps performed by the server in the foregoing embodiments may be based on the server structure as shown in Figure 13.

The CPU 1322 is configured to perform the following operations.

A corresponding result of route planning and original explanation data are determined according to a request of route planning which is for a mode of route planning, where the mode of route planning is configured to identify a cause for initiating the request of route planning.

A corresponding target explanation template is determined according to the mode of route planning and a route explaining scenario corresponding to the original explanation data.

Element information is determined according to the original explanation data and the target explanation template, where the element information includes an element identifier of a target explanation element corresponding to the result of route planning.

The element information is transmitted to a terminal device, where the element identifier in the element information is configured to indicate display of the target explanation element when the terminal device displays the result of route planning.

Optionally, the CPU 1322 may further execute steps in any method for displaying a route in the foregoing embodiments of the present disclosure.

A terminal device for displaying a route is further provided according to an embodiment of the present disclosure, and corresponds to the foregoing method for displaying a route.

Reference is made to Figure 14, which is a schematic structural diagram of a terminal device according to an embodiment of the present disclosure. Only a part related to embodiments of the present disclosure is depicted to facilitate understanding. Specific technical details which are not illustrated may refer to the counterpart in the foregoing method embodiments of the present disclosure. The terminal device may be any terminal device including a mobile phone, a tablet computer, a personal digital assistant, an in-vehicle terminal, or the like. Hereinafter a mobile phone is taken as an example of the terminal.

Figure 14 shows a block diagram of a partial structure of a mobile phone related to a terminal device according to an embodiment of the present disclosure. As shown in Figure 14, the mobile phone includes a radio frequency (RF for short) circuit 1410, a memory 1420, an input unit 1430 (including a touch panel 1431 and another input device 1432), a display unit 1440 (including a display panel 1441), a sensor 1450, an audio circuit 1460 (which may connect a speaker 1461 and a microphone 1462), a wireless fidelity (WiFi) module 1470, a processor 1480, a power supply 1490, and other components. A person skilled in the art may understand that the structure as shown in Figure 14 does not constitute a limitation to the mobile phone. The mobile phone may include more or fewer components, may combine some components, or may have different arrangements for the components.

In an embodiment, the memory 1420 in the mobile phone may store program codes, and transmit the program codes to the processor.

The processor 1480 in the terminal device further has following functions.

A request of route planning, which is for a mode of route planning, is transmitted to a server, where the mode of route planning is configured to identify a cause for initiating the request of route planning.

Element information returned by the server is obtained, where the element information includes an element identifier, and the element identifier is configured to indicate display of a target explanation element when the terminal device displays a result of route planning.

The target explanation element is determined from a pool of explanation resources, which are locally stored, according to the element identifier included in the element information.

The target explanation element is displayed when the result of route planning, which corresponds to the request of route planning, is displayed.

A computer-readable storage medium is further provided according to an embodiment of the present disclosure. The computer-readable storage medium is configured to store a computer program, and the computer program is configured to perform the method for displaying the route according to the foregoing embodiments.

A computer program product or a computer program is further provided according to an embodiment of the present disclosure. The computer program product or the computer program including computer instructions, and the computer instructions are stored in a computer-readable storage medium. A processor of a computer device reads the computer instructions from the computer-readable storage medium, and executes the computer instructions to configure the computer device to perform the method for displaying the route according to the foregoing embodiments.

Hereinabove illustrated are merely specific embodiments of the present disclosure, and the protection scope of the present disclosure are not limited thereto. Any modification or replacement that can be made by a person skilled in the art within the technical scope disclosed in the present disclosure shall fall within the protection scope of the present disclosure. Therefore, the protection scope of the present disclosure shall be subject to the protection scope of the appended claims.

## Claims

1. A method for displaying a route, executable on a server, wherein the method comprises:
determining a corresponding result of route planning and original explanation data according to a request of route planning which is for a mode of route planning, wherein the mode of route planning is configured to identify a cause for initiating the request of route planning;
determining a corresponding target explanation template according to the mode of route planning and a route explaining scenario corresponding to the original explanation data;
determining element information according to the original explanation data and the target explanation template, wherein the element information comprises an element identifier of a target explanation element corresponding to the result of route planning; and
transmitting the element information to a terminal device, wherein the element identifier in the element information is configured to indicate display of the target explanation element when the terminal device displays the result of route planning.

2. The method according to claim 1, wherein:
the request of route planning further comprises a type of a map product through which the request of route planning is transmitted, and
determining the corresponding target explanation template according to the mode of route planning and the route explaining scenario corresponding to the original explanation data comprises:
determining the corresponding target explanation template according to the type of the map product, the mode of route planning, and the route explaining scenario corresponding to the original explanation data.

3. The method according to claim 1 or 2, wherein the target explanation template is determined from explanation templates comprised in a first explanation template library, and the method further comprises:
obtaining a second explanation template library and a template library digest corresponding to the second explanation template library from an explanation template library server;
computing a to-be-checked digest according to the second explanation template library; and
replacing the first explanation template library with the second explanation template library in a case that verification based on the to-be-checked digest and the template library digest corresponding to the second explanation template library is passed.

4. The method according to claim 3, wherein the method further comprises:
determining a constitutional unit of an explanation element based on a type of the explanation element;
constructing a route explanation protocol according to the constitutional unit; and
determining the original explanation data and a first explanation template library comprising the target explanation template according to the route explanation protocol.

5. The method according to claim 4, wherein the target explanation template comprises a constitutional unit, content, a style, and a priority, of an explanation element which is to be displayed.

6. The method according to claim 5, wherein the method further comprises:
returning the result of route planning to the terminal device;
storing a correspondence between a route planning identifier of the result of route planning and the element information;
obtaining a request for explanation service, which is transmitted by the terminal device, wherein the request for explanation service carries the route planning identifier; and
retrieving the element information corresponding to the route planning identifier according to the correspondence, before transmitting the element information to the terminal device.

7. A method for displaying a route, executable on a terminal device, wherein the method comprises:
transmitting a request of route planning, which is for a mode of route planning, to a server, wherein the mode of route planning is configured to identify a cause for initiating the request of route planning;
obtaining element information returned by the server, wherein the element information comprises an element identifier, and the element identifier is configured to indicate display of a target explanation element when the terminal device displays a result of route planning;
determining the target explanation element from a pool of explanation resources, which are locally stored, according to the element identifier comprised in the element information; and
displaying the target explanation element when the result of route planning, which corresponds to the request of route planning, is displayed.

8. The method according to claim 7, wherein before obtaining the element information returned by the server, the method further comprises:
obtaining a result of route planning returned by the server, wherein the result of route planning carries a corresponding route planning identifier; and
transmitting a request for explanation service to the server according to the route planning identifier, wherein the request for explanation service is configured to request obtaining the element information from the server.

9. The method according to claim 7 or 8, wherein:
the mode of route planning is configured to identify the cause for initiating route planning before navigation, or the cause for initiating route planning during navigation, and
transmitting the request for explanation service to the server according to the route planning identifier comprises:
transmit the request of route planning to the server in a case that initial route planning is initiated for a designated source and a designated destination, or in a case that route planning is initiated during the navigation.

10. The method according to claim 9, wherein the method further comprises:
computing a display position corresponding to the target explanation element according to the result of route planning; and
displaying the target explanation element when the result of route planning, which corresponds to the request of route planning, is displayed comprises:
displaying the target explanation element at the display position when the result of route planning corresponding to the request of route planning is displayed.

11. An apparatus for displaying a route, comprising:
a first determining unit, configured to determine a corresponding result of route planning and original explanation data according to a request of route planning which is for a mode of route planning, wherein the mode of route planning is configured to identify a cause for initiating the request of route planning;
a second determining unit, configured to determine a corresponding target explanation template according to the mode of route planning and a route explaining scenario corresponding to the original explanation data;
a third determining unit, configured to determine element information according to the original explanation data and the target explanation template, wherein the element information comprises an element identifier of a target explanation element corresponding to the result of route planning; and
a fourth determining unit, configured to transmit the element information to a terminal device, wherein the element identifier in the element information is configured to indicate display of the target explanation element when the terminal device displays the result of route planning.

12. An apparatus for displaying a route, comprising:
a transmitting unit, configured to transmit a request of route planning, which is for a mode of route planning, to a server, wherein the mode of route planning is configured to identify a cause for initiating the request of route planning;
an obtaining element, configured to obtain element information returned by the server, wherein the element information comprises an element identifier, and the element identifier is configured to indicate display of a target explanation element when the terminal device displays a result of route planning;
a determining unit, configured to determine the target explanation element from a pool of explanation resources, which are locally stored, according to the element identifier comprised in the element information; and
a display unit, configured to display the target explanation element when the result of route planning, which corresponds to the request of route planning, is displayed.

13. A computer device, comprising a processor and a memory, wherein:
the memory is configured to store program codes and transmit the program codes to the processor, and
the processor is configured to perform the method according to any one of claims 1 to 10 based on instructions in the program code.

14. A computer-readable storage medium, configured to store a computer program, wherein:
the computer program is configured to perform the method according to any one of claims 1 to 10.

15. A system for displaying a route, comprising:
a server, configured to perform the method according to any one of claims 1 to 6, and
a terminal device, configured to perform the method according to any one of claims 7 to 10.

16. A computer program product, comprising instructions, wherein:
the instructions when executed on a computer configure the computer to perform the method according to any one of claims 1 to 10.
